Europäisches Patentamt

European Patent Office

Office européen des brevets

(19)

(11) Veröffentlichungsnummer: **0 321 652 B1**

(12) # EUROPÄISCHE PATENTSCHRIFT

(45) Veröffentlichungstag der Patentschrift: **06.11.91**

(51) Int. Cl.⁵: **F16D 65/18**, F16D 55/224

(21) Anmeldenummer: **88113650.1**

(22) Anmeldetag: **23.08.88**

(54) **Bremsvorrichtung.**

(30) Priorität: **19.12.87 DE 3743290**

(43) Veröffentlichungstag der Anmeldung:
**28.06.89 Patentblatt 89/26**

(45) Bekanntmachung des Hinweises auf die
Patenterteilung:
**06.11.91 Patentblatt 91/45**

(84) Benannte Vertragsstaaten:
**DE FR GB IT SE**

(56) Entgegenhaltungen:
**DE-A- 2 854 247**
**GB-A- 1 589 118**

(73) Patentinhaber: **Dr.Ing.h.c. F. Porsche Aktiengesellschaft**
**Porschestrasse 42**
**W-7000 Stuttgart 40(DE)**

(72) Erfinder: **Kroniger, Wilhelm, Dipl.-Ing.**
**Am Geissberg 20**
**W-7251 Friolzheim(DE)**
Erfinder: **Aydt, Günter, Dipl.-Ing.**
**Sechselberger Weg 3**
**W-7150 Backnang(DE)**
Erfinder: **Martin, Roland, Dipl.-Ing.**
**Bahnhofstrasse 33**
**W-7251 Weissach(DE)**

EP 0 321 652 B1

## Beschreibung

Scheibenbremsen können beim Bremsvorgang zum Quietschen neigen, was im wesentlichen durch eine oszillierende Bewegung des Bremssattels sowie der Bremsbacken hervorgerufen wird. Durch diese Bewegungen können an der Bremseinrichtung Schwingungen entstehen, die einen Schall abstrahlen, der für das menschliche Ohr als sogenanntes "Quietschen" wahrnehmbar wird.

Der Erfindung liegt die Aufgabe zugrunde, ein Bremsenquietschen bei einer Betätigung zu unterdrücken.

Diese Aufgabe wird erfindungsgemäß durch die kennzeichnenden Merkmale des Anspruchs 1 gelöst. Weitere vorteilhafte Merkmale beinhalten die Unteransprüche.

In DE-A-37 38 764 ist bereits eine Ausführungsform beschrieben, bei der im hohlen Betätigungskolben ein metallisches massebehaftetes Einsatzteil mit Spiel über ein Flanschelement auf der Stirnfläche des Betätigungskolbens gehalten wird. Hierdurch wird ein baulich einfaches Teil erzielt, welches in eine Bohrung des Betätigungskolbens einsetzbar ist und ein Bremsenquietschen durch eine Schwingungsminderung und Dämpfung unterbindet. Diese Dämpfung erfolgt im wesentlichen durch eine reibende Verbindung zwischen dem Flansch des Einsatzteils und dem Kolben sowie dem Flansch des Einsatzteils und der rückseitigen Fläche der Bremsbacke.

Es hat sich im Betrieb gezeigt, daß die Bremsbacke Bewegungen in Umfangs-Radial- und Achsialrichtung durchführt. Damit diese Bewegungen weitestgehend verhindert werden können, da sie den Bremssattel ebenfalls zu Schwingungen anregen, wird statt eines tellerförmigen Teils am Einsatzteil nach dem Hauptpatent eine plattenförmige flächig an der Bremsbacke anliegende Zwischenlage verwendet, die mit den beiden Einsatzteilen fest verbunden ist. Durch diese plattenförmige Zwischenlage mit der reibungserhöhenden Schicht, die sich nahezu über die gesamte rückseitige Fläche der Bremsbacke erstreckt und mit den Einsätzen verbunden ist, wird eine bewegungshemmende Wirkung auf die Bremsbacke und somit auch auf den Bremssattel erzielt. Insbesondere tragen die aus einem Gummimaterial bestehenden Beschichtungen hierzu bei, wodurch eine gezielte Dämpfung der Umfangs-Reibschwingungen der Bremsbacke erreicht wird und sich die Bremsbacken-Geräusche unterdrücken lassen. Insbesondere ist zur Reibungserhöhung zwischen der Zwischenlage und der Bremsbacke auf der Bremsbacke zugerichteten Fläche eine gummiartige Schicht oder eine Lackschicht angeordnet.

Ausführungsbeispiele der Erfindung sind in der Zeichnung dargestellt und werden im folgenden näher beschrieben.

Es zeigen:

Fig. 1    eine Draufsicht auf eine Scheibenbremse mit Betätigungskolben und Einsätzen sowie einer mit diesen verbundenen plattenförmigen Zwischenlage,

Fig. 2    eine Draufsicht auf eine plattenförmige Zwischenlage mit Einsätzen,

Fig. 3    eine weitere Ausführung einer Bremsvorrichtung mit einer stirnseitig gezahnten Fläche des Betätigungskolbens und einem Einsatz mit Zwischenlage,

Fig. 4    eine weitere Ausführung mit einer auf dem Einsatz formschlüssig gehaltenen plattenförmigen Zwischenlage und

Fig. 5    einen Schnitt durch die plattenförmige Zwischenlage nach der Linie V-V der Fig. 2.

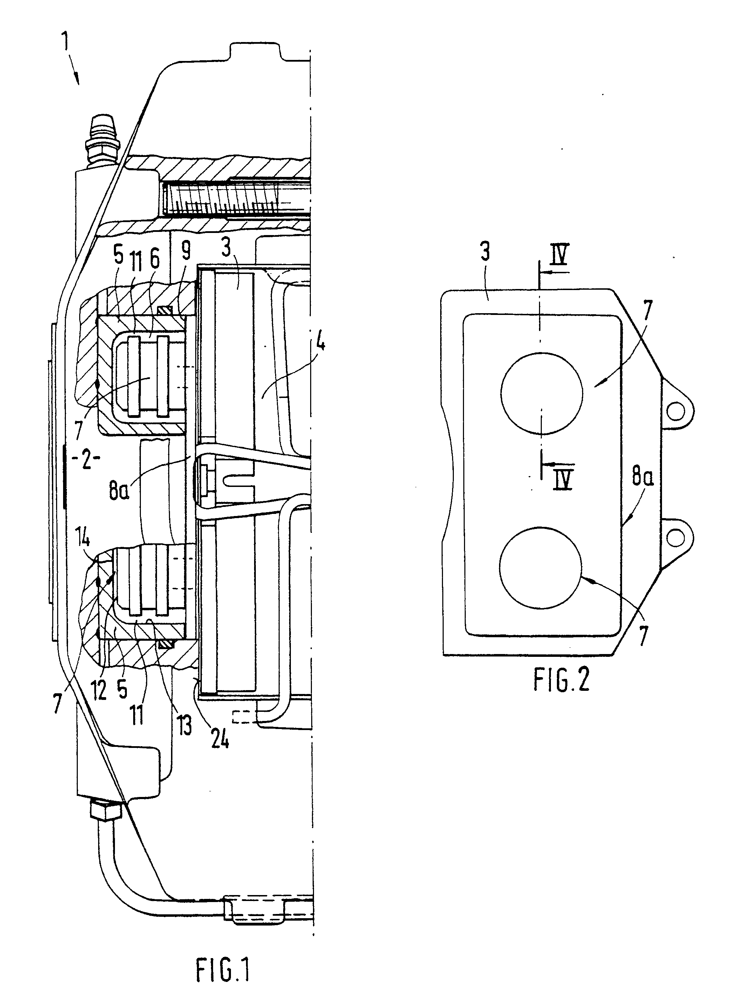

Fig. 1 zeigt eine Bremsvorrichtung 1 eines Fahrzeugrades, die einen Bremssattel 2 mit geführten Bremsbacken 3 umfaßt, zwischen denen eine Bremsscheibe 4 angeordnet ist. Über hydraulisch beaufschlagbare Betätigungskolben 5 werden diese beim Bremsvorgang gegen die Bremsscheibe 4 gepreßt. In jedem Betätigungskolben 5 ist eine der Bremsbacke 3 zugerichtete konzentrische Bohrung 6 vorgesehen, in der ein zylinderförmiges Einsatzteil 7 angeordnet ist. Es umfaßt an seinem der Bremsbacke 3 zugerichtetem vorderen Ende ein die Kolbenstirnfläche 9 überdeckendes Element in Form einer plattenförmigen Zwischenlage 8a, die der rückseitigen Bremsbackenfläche 24 unmittelbar gegenübersteht. Das Einsatzteils 7 ist mit einem radialen Spiel 11 zur Innenumfangsfläche 13 und mit einem axialen Spiel 12 zur Bodenfläche 14 in der Bohrung 6 gehalten, wobei es sich über die plattenförmige Zwischenlage 8a zur Kolbenstirnfläche 9 hin abstützt.

Die Zwischenlage 8a ist mit den beiden Einsatzteilen 7 verbunden, z.B. durch eine Nietung, Schraubung, Klebung oder dergleichen Verbindungsverfahren bzw. durch eine formschlüssige Verbindung.

Insbesondere ist die Zwischenlage 8a aus einem metallischen Werkstoff bestehend und beidseitig mit dünnen reibungserhöhenden Schichten wie z.B. Gummischichten 22 und 23 oder Lackschichten belegt.

Die Größe der Zwischenlage 8a entspricht etwa der rückseitigen Fläche 24 der Bremsbacke 3, so daß eine gezielte Bedämpfung von Umfangs- Reibschwingungen der Bremsbacke 3 erzielt wird.

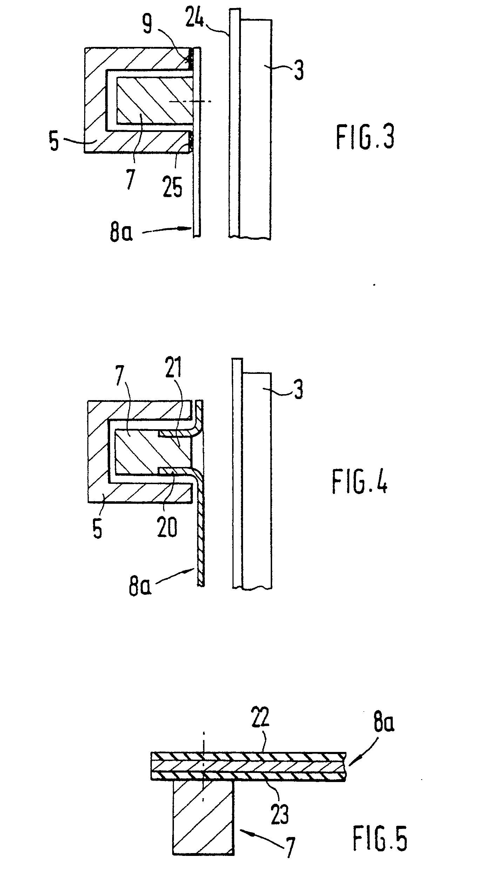

Die Verbindung der plattenförmigen Zwischenlage 8a kann auch über einen Formschluß zwischen dem Einsatzteil und der Zwischenlage 8a erfolgen. Hierzu weist die Zwischenlage 8a eine hülsenförmige Ausdrückung 20 auf, die einen vorderen abgesetzten zylindrischen Bereich 21 des Einsatzteiles 7 klemmend übergreift, wie Fig. 4 näher zeigt.

Nach einer weiteren Ausführung kann die Stirnfläche 9 des Betätigungskolbens 5 zur Reibungserhöhung auch mit einer Verzahnung 25 versehen sein, was in Fig. 3 näher gezeigt wird.

Nach einer weiteren nicht gezeigten Ausführrungsform kann das Einsatzteil 7 mit einem Material erhöhter Reibung entsprechend der plattenförmigen Zwischenlage 8 ummantelt sein.

**Patentansprüche**

1. Scheibenbremse (1) für Fahrzeuge mit in Bremssattel (2) zu beiden Seiten einer Bremsscheibe (4) geführten Bremsbacken (3), die mit hydraulisch beaufschlagbaren Betätigungskolben (5) in Verbindung stehen, wobei jeder Betätigungskolben eine der Bremsbacke zugerichtete Bohrung (6) aufweist, in der ein zylindrisches Einsatzteil (7) angeordnet ist, das ein die Kolbenstirnfläche überdeckendes Element umfaßt und zur Innenumfangs- und Bodenfläche der Bohrung mit Spiel gehalten ist, **dadurch gekennzeichnet,** daß das Element aus einer plattenförmigen Zwischenlage (8a) besteht, die mit den beiden zylindrischen Einsatzteilen (7) fest verbunden ist.

2. Scheibenbremse nach Anspruch 1, dadurch gekennzeichnet, daß die Zwischenlage (8a) metallisch ausgebildet und mindestens auf der der rückseitigen Fläche (24) der Bremsbacke (3) zugerichteten Fläche mit einer reibungserhöhenden Schicht (22) versehen ist.

3. Scheibenbremse nach den Ansprüchen 1 oder 2, dadurch gekennzeichnet, daß reibungserhöhende Schichten (22 und 23) auf beiden Seiten der Zwischenlage (8a) angeordnet sind und aus einem gummiartigen Material bestehen.

4. Scheibenbremse nach den Ansprüchen 1 oder 2, dadurch gekennzeichnet, daß die reibungserhöhenden Schichten aus einer Lackschicht bestehen.

5. Scheibenbremse nach einem oder mehreren der vorhergehenden Ansprüche, dadurch gekennzeichnet, daß die Zwischenlage (8a) mit den Einsatzteilen (7) fest verbunden ist und annähernd eine Größe entsprechend der rückseitigen Fläche (24) der Bremsbacke (3) aufweist.

6. Scheibenbremse nach einem oder mehreren der vorhergehenden Ansprüche, dadurch gekennzeichnet, daß die plattenförmige Zwischenlage (8a) mindestens mit einem Einsatzteil (7) formschlüssig verbunden ist, derart, daß eine hülsenartige Ausdrückung (20) in der Zwischenlage (8a) einen vorderen abgesetzten zylindrischen Bereich (21) des Einsatzteils (7) klemmend übergreift.

7. Scheibenbremse nach einem oder mehreren der vorhergehenden Ansprüche, dadurch gekennzeichnet, daß die Kolbenstirnfläche (9) mit einer Verzahnung (25) versehen ist.

**Claims**

1. A disc brake (1) for vehicles, having brake pads (3) guided in a brake yoke (2) on both sides of a brake disc (4) and connected to actuating pistons (5) which can be acted upon hydraulically, each actuating piston having a bore (6) which faces the brake pad and in which is arranged a cylindrical insert part (7) which surrounds a member covering the end face of the piston and which is held with a clearance with respect to the internal peripheral and base face of the bore, characterized in that the member comprises a plate-shaped intermediate layer (8a) which is rigidly joined to the two cylindrical insert parts (7).

2. A disc brake according to Claim 1, characterized in that the intermediate layer (8a) is made of metal and is provided with a friction-increasing layer (22) at least on the face towards the rear face (24) of the brake pad (3).

3. A disc brake according to Claim 1 or 2, characterized in that friction-increasing layers (22 and 23) are provided on both sides of the intermediate layer (8a) and consist of a rubber-like material.

4. A disc brake according to Claim 1 or 2, characterized in that the friction-increasing layers consist of a lacquer layer.

5. A disc brake according to one or more of the preceding Claims, characterized in that the intermediate layer (8a) is rigidly joined to the insert parts (7) and is substantially of a size corresponding to the rear face (24) of the brake pad (3).

6. A disc brake according to one or more of the preceding Claims, characterized in that the plate-shaped intermediate layer (8a) is connected with positive locking at least to one insert part (7) in such a way that a sleeve-like pressing (20) in the intermediate layer (8a) engages in a clamping manner over a front offset cylindrical area (21) of the insert part (7).

7. A disc brake according to one or more of the preceding Claims, characterized in that the piston end face (9) is provided with a toothing (25).

**Revendications**

1. Frein à disque (1) pour véhicule automobile comportant des mâchoires de frein (3) guidées dans un étrier de frein (2), des deux côtés d'un disque de frein (4), lesquelles mâchoires sont reliées à des pistons d'actionnement (5) à commande hydraulique, chaque piston d'actionnement présentant un alésage (6) dirigé vers la mâchoire de frein, alésage dans lequel est placé un insert cylindrique (7) qui comporte un élément recouvrant la face frontale de piston et qui est maintenu avec un certain jeu par rapport à la surface périphérique intérieure et à la surface de fond de l'alésage, caractérisé en ce que l'élément est constitué par un intercalaire (8a) en forme de plaque qui est solidaire des deux inserts cylindriques (7).

2. Frein à disque selon la revendication 1, caractérisé en ce que l'intercalaire (8a) est en métal et est pourvu d'une couche (22) augmentant la friction sur au moins la surface tournée vers la face arrière (24) de la mâchoire de frein (3).

3. Frein à disque selon la revendication 1 ou 2, caractérisé en ce que des couches augmentant la friction (22 et 23) sont prévues sur les deux faces de l'intercalaire (8a) et sont réalisées dans un matériau caoutchouteux.

4. Frein à disque selon la revendication 1 ou 2, caractérisé en ce que les couches augmentant la friction sont réalisées dans une couche de laque.

5. Frein à disque selon une ou plusieurs des revendications précédentes, caractérisé en ce que l'intercalaire (8a) est solidaire des inserts (7) et présente des dimensions correspondant à peu près à celles de la face arrière (24) de la mâchoire de frein (3).

6. Frein à disque selon une ou plusieurs des revendications précédentes, caractérisé en ce que l'intercalaire (8a) en forme de plaque est relié par concordance de forme avec un moins un insert (7), de manière qu'une partie comprimée (20) en forme de douille de l'intercalaire (8a) passe sur une zone cylindrique (21) avant, étagée, de l'insert (7), en le serrant.

7. Frein à disque selon une ou plusieurs des revendications précédentes, caractérisé en ce que la face frontale de piston (9) est pourvue d'une denture (25).

FIG.1

FIG.2

FIG.3

FIG.4

FIG.5